# EUROPEAN PATENT SPECIFICATION

(11) **EP 0 607 172 B1**
(45) Date of publication and mention of the grant of the patent: **27.11.1996**
(21) Application number: 92919270.6
(22) Date of filing: 10.09.1992
(51) Int. Cl.: H02G 3/06

(54) **IMPROVEMENTS RELATING TO COUPLING DEVICES**
VERBESSERUNGEN AN KUPPLUNGSVORRICHTUNGEN
AMELIORATIONS RELATIVES A DES DISPOSITIFS D'ACCOUPLEMENT

(30) Priority: 10.10.1991 GB 9121518
(43) Date of publication of application: 27.07.1994
(73) Proprietor: SWIFTS OF SCARBOROUGH LIMITED, Eastfield Scarborough YO11 3BY (GB)
(72) Inventor: GREGORY, Edwin, Stuart, Scarborough YO11 3AR (GB)
(74) Representative: Denmark, James
(86) International application number: GB9201660
(87) International publication number: WO9307665

(56) References cited:
- EP-A- 0 315 023
- EP-A- 0 320 899

## Description

This invention relates to coupling devices, and concerns a means for the coupling together of components such as cable trays and cable tray accessories. The device can be used in connection with other and equivalent arrangements.

Cable tray systems are used for the support of electrical cable service pipes and the like in factory and other installations and a cable tray system comprises typically long lengths of cable tray connected end to end, and connected to junctions by means of accessories whereby the cables can be laid horizontally and vertically in any particular factory installation, whilst still being retained in a tray component provided with a base and side flanges. In some systems known as the "return flange" systems each cable tray comprises a base with side flanges, and the said side flanges are turned over and inwards, hence the expression return flange, and means have to be provided in order to couple such cable trays end to end, or to adjacent accessories such as cross pieces, T pieces, risers and the like.

The most common method of connecting the tray lengths end to end is to use coupling pieces which overlie the adjacent ends and through which bolts can be passed, the bolts also passing through the flanges and/or bases of the cable tray ends, for the secure fixing of the cable trays end to end.

When a cable tray end is fixed to an accessory, it is known to provide the accessory with extension tongues which overlap the cable tray side flanges, and again bolts are used which pass through the tongues and cable tray side flanges to effect the connection. The accessory may also be provided with a fish plate which lies to the underside or to the top side of the cable tray base, the fish plate also being used for coupling of the accessory to the cable tray end by means of bolts passing through holes in the fish plate and cable tray base.

A cable tray system of this type is known from EP-A-0 315 023.

Accessories usually have bases, and the accessory bases and the cable tray bases are provided with patterns of apertures for the securement of the cables and service pipes to the cable tray and accessory bases.

In the installation of cable tray systems of the type described above, the installation and tightening of the fixing bolts represents a constant source of difficulty. The cable tray systems may require to be installed in inaccessible locations and the fitter may be required to work above his head making effective tightening of the bolts difficult.

Accordingly, there is a need for providing coupling arrangements suitable for use in connection with cable tray installations of the type described above, whereby the installation process can be simplified.

In accordance with the present invention in its widest aspect there is provided a cable tray end or accessory for use with cable tray systems of the return flange type, wherein the base of the cable tray and the inner base surface of the return flange of the cable tray define a pair of substantially parallel abutment surfaces, the cable tray end or accessory being provided with a tongue, the tongue and abutment surfaces being constructed and designed so that the tongue can be inserted and locked between the abutment surfaces, said tongue for this purpose comprising a front end and a rear end, characterised in that said front end is narrower than the rear end so as to be capable of insertion freely between the abutment surfaces and so that following said insertion by a rocking of the tongue a projection on the front end of the tongue engages one of said surfaces, and an edge at the other side of the tongue and at the rear thereof engages the other of said abutment surfaces in locking fashion.

The tongue preferably comprises a plate portion having parallel sides towards the rear, but cut away to taper to a hook portion having said projections at the front end and to one side thereof.

Tongue locking devices have been used in other non-related fields as indicated in prior patent specifications Nos. GB 2065259A and French 2336103.

As many of said tongues as are required are provided on the cable trays and/or accessories in any particular cable tray installations.

To give an indication of the particular utility of the invention in relation to cable tray installations, assume that a return flange type accessory is provided with a pair of said tongues where the accessory is to couple to the end of a return flange cable tray. The accessory to connect same to the cable tray is tilted so that the tongue narrow ends are presented into the return flange portions of the cable tray, and when fully inserted, the accessory is rocked so as to become aligned with a cable tray which has the effect of locking the tongue projections and locking edges into locking engagements with the return flanges and base of the cable tray effecting the coupling between the two.

The tongue and flanges may be provided with fastening apertures if required by the person supervising the installation of the cable tray system, but the invention has particular advantage in that by the coupling method fastening bolts may not be necessary.

The invention has further particular application in relation to cable tray systems wherein the components are fabricated from mild steel and are hot dip galvanised, by the hot dip galvanising process, because when a product is hot dip galvanised, galvanising residue tends to cling to the product and produce locally thickened regions which disturbs the tolerances of the product. Typically, residues may collect in the return flange portions of the cable trays so that it would be difficult simply to slide a neat fitting tongue linearly into said return flange portions. The insertion of narrow end tongues followed by rocking provides an ideal means of establishing a coupling arrangement.

Additionally, if the tongues are not a neat fit in the return flanges when rocked into locking position, the projections will simply deform, completing the coupling operation and indeed enhancing same.

The tongues may be of any suitable length depending upon the coupling effect to be achieved, and also depending upon the design of the component of which they are part. Thus, accessories are stamped from sheet metal plate and it is often a design feature of the stamping operation that as many accessories as possible have to be fitted into the plate for the most economical utilisation of the material. This may dictate that the coupling tongues in one component may have to be of different dimensions. This does not depart from the scope of the invention.

An embodiment of the invention will now be described, by way of example, with reference to the accompanying drawings, wherein:-
Fig. 1 is a plan view of a blank stamp from sheet metal and for folding into an accessory with coupling tongues according to the invention;
Fig. 2 is a view similar to Fig. 1 but showing another form of accessory;
Fig. 3 is a perspective view of an accessory formed from the blank shown in Fig. 1 and also shown is the end of cable tray to be coupled to the accessory; and
Figs. 4, 5 and 6 show respectively the sequence of operations involved in coupling of a coupling tongue of the accessory shown in Fig. 3 to a cable tray of the type also shown in Fig. 3.

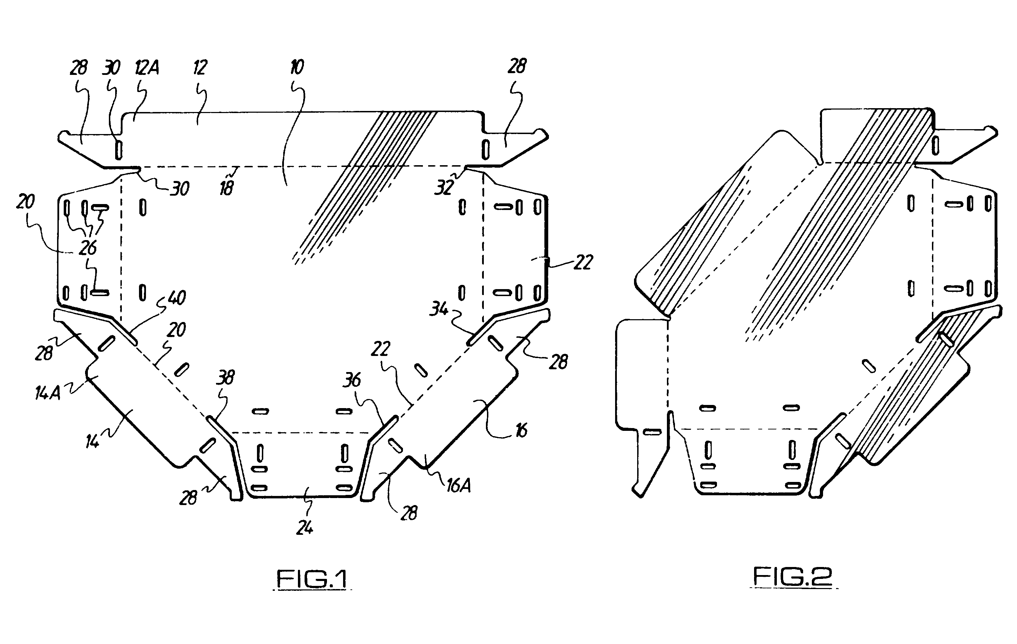

Referring to the drawings, two cable tray accessory metal blanks are shown in Figs. 1 and 2, these blanks having been produced for example from mild sheet steel.

The constructional and operational features of the two blanks are essentially the same, and the only difference is that the blank of Fig. 1 is known as a T-section accesory, whilst the blank of Fig. 2 is a corma accessory.

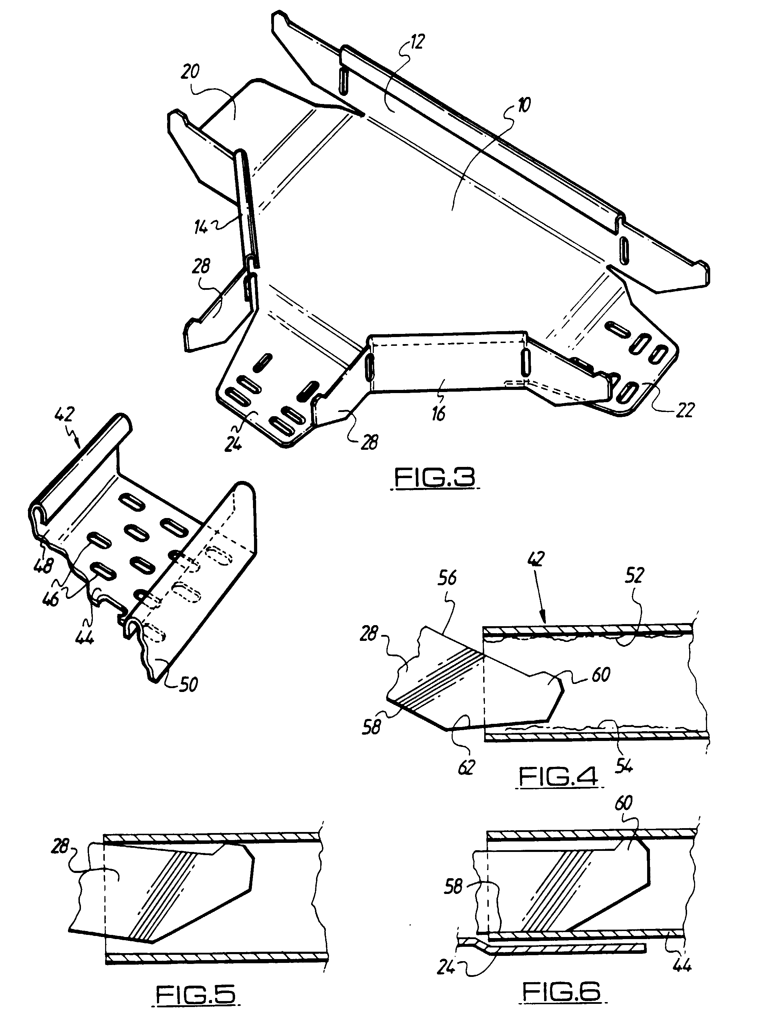

The blank of Fig. 1 is provided with a base section 10 having flange sections 12, 14 and 16. The flange sections 14 and 16 lie at an angle to flange section 12, as shown, and lines 18, 20 and 22 are indications of where the blank is to be folded in order to erect the flange sections 12, 14 and 16 relative to the base section 10 until the arrangement shown in Fig. 3 is reached. Additionally, the topmost edges 12A, 14A and 16A are folded into U configuration also shown in Fig. 3 so that the flanges 12, 14 and 16 become of the return flange type as described herein.

Between adjacent flange ends the base 10 is integral with fish plates 20, 22 and 24 each provided with an aperture pattern 26 as shown. These fish plates have the function of engaging either the underside or topside of the base of the cable tray to be connected at the appropriate fish plate to the accessory. Normally, the fish plate will be joggled downwardly as shown in Fig. 3 so as to lie to the underside of the cable tray as will be explained hereinafter.

To the ends of each of the flanges 12, 14 and 16 is provided a coupling tongue 28, the purpose of which is to engage in the return flange of an associated cable tray again as will be explained in more detail in relation to Figs. 3 - 6 hereinafter.

Where the tongue 28 connects the adjacent flange 12, 14 and 16 there is an aperture 30 the purpose of which is to weaken the metal at such connection to enable the tongue to be bent manually when installation is taking place.

To define the tongues during the stamping operation for producing the blank of Fig. 1, appropriate slots 30, 32, 34, 36, 38 and 40 must be formed between the tongue and the associated fish plate and base 10 as can be seen clearly in Fig. 1. The projection of these slots into the base 10 facilitates the bending operation which has to be performed to shape the blank of Fig. 1 into the accessory of Fig. 3.

If reference is now made to Fig. 3, a cable tray 42 is shown, and it will be seen to comprise a base 44 provided with an aperture pattern 46. Extending from the sides of the base are return flanges 48 and 50 of a height corresponding to the flanges 12, 14 and 16 of the accessory to which it is to be connected. The cable tray 42 is shown as being in a position to couple to the accessory in the region of the fish plate 24. The flanges 48 and 50 being arranged to receive the tongues 28 adjacent fish plate 24. Fish plate 24 is joggled downwardly so that it will underlie the base 44 when the cable tray end is coupled to the accessory.

When accessories and cable trays are produced in mild steel, it is normal to protect them against corrosion by hot dip galvanising and the problem with this galvanising method is that the galvanising material tends to remain in uneven residues on the article which is galvanised, especially in locations where the material can be trapped such as in the base of the bent over portions defining the flange returns. If reference is made to Fig. 4, where the cable tray 42 is shown in section through one of the flanges, the residue of galvanising material is indicated by reference 52 at the base of the bent portion of the flange, and by 54 at the base of the cable tray to the inside thereof. The edges on which the residues 52 and 54 lie in fact form a pair of parallel edges for providing support for the tongues 28 in order that the tongues can lock to the cable tray. If the tongues 28 were simply rectangular in configuration and designed to slide neatly between the support edges of the return flange, the residues 52 and 54 would make fitting impossible as they would obstruct the inward passage of the tongues 28. However by so designing the tongues, they can be fitted as illustrated in Figs. 4, 5 and 6 which illustrate this particular embodiment of the invention.

Each tongue as shown is provided with a pair of parallel sides 56 and 58 which extend from the portion of the tongue connected to the adjacent flange 12, 14 or 16, referred to as the rear of the tongue, whilst at the front of the tongue, at the end of the edge 56 is provided a nose or hook 60, and at the other side the tongue is chamfered as shown at 62 so that in fact the tongue at the front end adopts a tapering form.

The distance between the edges 56 and 58 is less than that between the parallel support edges of the cable tray flange so that as shown clearly in Figs. 4, 5 and 6, the tongue 28 can be inserted into the flange of the cable tray by initially tilting the accessory relative to the cable tray so that the tongues 28 can be fed in as shown in Fig. 4, until they reach the position shown in Fig. 5, after which the accessory and cable tray are relatively pivoted into alignment whereby the hook projection 60 and the lower edge 58 of the tongues lock into the opposite support edges of the cable tray and the tongues lock in position. Fig. 6 also shows how the fish plate 24 lies to the underside of the base 44 of the cable tray end.

A simple and effective means of locking the accessory to the cable tray is provided and because the tongue is designed with clearance, the residues 52 and 54 of galvanising material do not interfere with the coupling method. If the projection 60 is too large to fit as shown in Fig. 6, it will simply deform as the accessory and cable tray are pivoted into alignment, further enhancing a coupling effect.

With this arrangement it is believed that it will not be necessary to provide any apertures in the tongue or indeed in the side flanges of the cable tray to effect the coupling, although bolts may still be used for connecting the fish plate 24 to the cable tray base 44 and in this connection thefish plate aperture pattern 26 and the cable tray aperture pattern 46 preferably are arranged such that if the end of the cable tray is cut for example to cut the cable tray to length, when the cable tray is coupled to the accessory there will always be sufficient alignment between some of the apertures in the fish plate and some of the apertures in the cable tray base to ensure that bolts can be passed therethrough for the fixing together of the components.

The tongues may be of any appropriate length and height depending upon the cable tray design, and also depending upon how the accessory blanks are to be punched from the sheet material but the method of coupling takes care of wide differences in tolerances as can be understood.

The tongues need not be on accessories, but could be on cable tray ends where such cable trays are to be fitted end to end, although from a manufacturing point of view, it is preferred that the cable trays be manufactured in constant cross section lengths, as it is often the case when fitting cable trays on site that they have to be cut to suit the installation.

## Claims

1. A cable tray end or accessory for use with cable tray systems of the return flange type, wherein the base (44) of the cable tray (42) and the inner base surface of the return flange (48,50) of the cable tray define a pair of substantially parallel abutment surfaces (52,54), the cable tray end or accessory being provided with a tongue (28), the tongue and abutment surfaces being constructed and designed so that the tongue can be inserted and locked between the abutment surfaces, said tongue for this purpose comprising a front end and a rear end, characterised in that said front end is narrower than the rear end so as to be capable of insertion freely between the abutment surfaces (52,54) and so that following said insertion by a rocking of the tongue (28) a projection (60) on the front end of the tongue (28) engages one of said surfaces (52), and an edge (58) at the other side of the tongue (28) and at the rear thereof engages the other of said abutment surfaces (54) in locking fashion.

2. A cable tray end or accessory according to Claim 1, characterised in that the tongue (28) comprises a plate portion having parallel sides (56, 58) towards the rear, but cut away to taper to a hook portion (60) having said projection (60) at the front end and to one side thereof.

3. A cable tray end or accessory according to Claim 2, characterised in that a return flange type accessory (10) is provided with a pair of said tongues (28) where the accessory is to couple to the end of a return flange cable tray (42).

4. A cable tray end or accessory according to any preceding claim, characterised in that the tongue or tongues (28) is or are provided with fastening apertures.

## Patentansprüche

1. Kabelkastenende oder Zubehörteil zur Verwendung von Kabelkasten-Systemen des Typs mit U-förmig nach innen umgebogenen Enden der Seitenwände, wobei das Basisteil (44) des Kabelkastens (42) und der Grund der U-förmig umgebogenen Enden (48, 50) des Kabelkastens ein Paar im wesentlichen paralleler Anlageflächen (52, 54) bilden und das Kabelkastenende oder das Zubehörteil mit einer Zunge (28) ausgestattet ist und wobei die Zunge und die Anlagefläche so ausgelegt und geformt sind, daß die Zunge zwischen den Anlageflächen angeordnet und festgelegt werden kann und daß die Zunge zu diesem Zweck ein Vorderteil und ein Hinterteil aufweist, dadurch gekennzeichnet, daß das Vorderteil schmaler ist als das Hinterteil, so daß es leicht zwischen den Anlageflächen (52, 54) eingebracht werden kann, und daß durch ein Schwenken der Zunge (28) nach dem Einbringen ein Vorsprung (60) am Vorderteil der Zunge (28) an einer der Flächen (52) anliegt und eine Kante (58) am anderen Teil der Zunge (28) und an deren hinteren Ende in Schließstellung an der anderen Anlagefläche (54) anliegt.

2. Kabelkastenende oder Zubehörteil nach Anspruch 1, dadurch gekennzeichnet, daß die Zunge (28) ein ebenes Teil mit parallelen Kanten (56, 58) im hinteren Teil aufweist, daß im vorderen Teil jedoch einseitig ein Teil abgeschnitten ist, so daß dieser Teil schräg in ein hakenförmiges Teil (60) ausläuft, der den Vorsprung (60) aufweist.

3. Kabelkastenende oder Zubehörteil nach Anspruch 2, dadurch gekennzeichnet, daß ein Zubehörteil (10) des Typs mit U-förmig nach innen umgebogenen Enden der Seitenwände mit einem Paar besagter Zungen (28) ausgestattet ist, wenn das Zubehörteil mit dem Ende eines Kabelkastens (42) dieses Typs verbunden werden soll.

4. Kabelkastenende oder Zubehörteil nach einem der vorhergehenden Ansprüche, dadurch gekennzeichnet, daß die Zunge oder Zungen (28) mit Befestigungsöffnungen versehen ist oder sind.

## Revendications

1. Extrémité ou accessoire de chemin de câbles pour utilisation avec des systèmes de chemin de câbles du type à rebord retourné, dans lequel la base (44) du chemin de câbles (42) et la surface de base interne du rebord retourné (48, 50) du chemin de câbles définissent une paire de surfaces d'appui (52, 54), pratiquement parallèles, l'extrémité ou l'accessoire de chemin de câbles étant pourvu d'une languette (28), la languette et les surfaces d'appui étant faites et prévues de façon que la languette peut être insérée et bloquée entre les surfaces d'appui, ladite languette comprenant, à cet effet, une extrémité avant et une extrémité arrière, caractérisé en ce que ladite extrémité avant est plus étroite que l'extrémité arrière de façon à pouvoir s'insérer librement entre les surfaces d'appui (52, 54) et de façon qu'après l'insertion en faisant basculer la languette (28), un épaulement (60) situé sur l'extrémité avant de la languette (28) vient en contact avec une (52) desdites surfaces et un bord (58) situé de l'autre côté de la languette (28) et à l'arrière de celle-ci vient en contact avec l'autre (54) desdites surfaces d'appui de façon à se bloquer.

2. Extrémité ou accessoire de chemin de câbles suivant la revendication 1, caractérisé en ce que la languette (28) comporte une partie plate qui a des côtés parallèles vers l'arrière, mais découpés pour se rétrécir vers une partie en crochet (60) qui comporte ledit épaulement (60) à l'extrémité avant et vers un de ses côtés.

3. Extrémité ou accessoire de chemin de câbles suivant la revendication 2, caractérisé en ce qu'un accessoire de type à rebord retourné (10) est pourvu d'une paire desdites languettes (28) là où l'accessoire doit s'accoupler à l'extrémité d'un chemin de câbles de rebord retourné (42).

4. Extrémité ou accessoire de chemin de câbles suivant l'une quelconque des revendications précédentes, caractérisé en ce que la languette ou les languettes (28) sont pourvues de perforations de fixation.
